**Europäisches Patentamt**

**European Patent Office**

**Office européen des brevets**

(11) Numéro de publication: **0 105 774**
**B1**

(12) **FASCICULE DE BREVET EUROPEEN**

(45) Date de publication du fascicule du brevet: **01.07.87**

(51) Int. Cl.⁴: **B 60 R 25/00**, B 60 R 25/04

(21) Numéro de dépôt: **83401796.4**

(22) Date de dépôt: **14.09.83**

(54) **Système anti-vol pour véhicule automobile.**

(30) Priorité: **24.09.82 FR 8216132**

(43) Date de publication de la demande:
**18.04.84 Bulletin 84/16**

(45) Mention de la délivrance du brevet:
**01.07.87 Bulletin 87/27**

(84) Etats contractants désignés:
**AT BE CH DE GB IT LI LU NL SE**

(56) Documents cités:
**FR-A-2 451 848**
**FR-A-2 487 274**
**GB-A-2 018 482**
**GB-A-2 045 985**
**GB-A-2 069 207**
**US-A-4 192 400**

(73) Titulaire: **Verine, Jean-Pierre**
**6-8 rue Firmin Gillot**
**F-75015 Paris (FR)**

(72) Inventeur: **Verine, Jean-Pierre**
**6-8 rue Firmin Gillot**
**F-75015 Paris (FR)**

(74) Mandataire: **Bonnetat, Christian et al**
**Cabinet PROPI Conseils 23 rue de Léningrad**
**F-75008 Paris (FR)**

Courier Press, Leamington Spa, England.

### Description

La présente invention concerne un système anti-vol pour véhicule automobile, notamment pour les automobiles de luxe.

On sait que le vol des voitures de luxe, en vue de leur revente après maquillage, est une industrie très prospère, au point que certains modèles de certaines marques d'automobiles ont une probabilité d'au moins 70 % d'être volés.

Pour tenter de faire échec à des telles pratiques, on a déjà prévu de nombreux systèmes anti-vol. Cependant, l'efficacité de ceux-ci est très faible du fait que les voleurs sont équipés pour emporter les automobiles volées sur des camions à plate-forme, afin de les conduire dans des garages, où ils ont tout loisir pour éliminer ces systèmes anti-vol.

Dans ces conditions, il est pratiquement illusoire de tenter de trouver un système anti-vol ayant une efficacité absolue. Il est plus réaliste de prévoir un système qui, quoique n'étant certainement pas absolument inviolable, impose de telles difficultés à sa violation ou à son élimination que ces opérations deviennent suffisamment longues et coûteuses pour décourager le vol et le maquillage.

La présente invention concerne un système de ce type.

A cette fin, selon l'invention, le système anti-vol pour véhicule automobile, notamment de luxe, du type comprenant une unité de commande centrale contrôlant le fonctionnement d'une pluralité d'organes ou accessoires du véhicule et actionnée par des moyens codés au moins en partie à la disposition du propriétaire de celui-ci, ledit système comportant une pluralité d'unités de commande décentralisées, chacune associée à un desdits organes ou accessoires et ladite unité de commande centrale commandant chacune desdites unités de commande décentralisées est caractérisé en ce que ladite unité de commande centrale est incorporée de façon inaccessible sans détérioration à un élément structurel dudit véhicule, tel que le bloc moteur, la boîte de vitesses ou le châssis du véhicule.

On remarquera que le document GB—A—2 069 207 décrit déjà un système anti-vol pour véhicule automobile du type décrit dans le préambule de la revendication 1, comprenant des moyens codés agissant sur une unité de commande centrale, elle-même commandant une pluralité d'unités de commande décentralisées, chacune étant associée à un organe du véhicule dont elle commande le fonctionnement.

Dans ce document, il n'est ni décrit, ni suggéré d'incorporer l'unité de commande centrale à un élément structurel du véhicule, unité centrale qui peut être, selon l'invention, noyée dans la paroi du bloc moteur, de la boîte de vitesse, ou bien encore du châssis du véhicule. La caractéristique de l'invention est importante puisque de ce fait, les transformations à effectuer sur un véhicule volé, afin de pouvoir le réutiliser, sont tellement importantes et coûteuses, que le vol en est découragé.

Par ailleurs, dans le document US—A—4 192 400, il est prévu d'incorporer un élément électronique dans un distributeur ou un démarreur. On remarquera tout de suite qu'un distributeur ou un démarreur ne peut pas être considéré comme une pièce structurelle d'un véhicule. Ce ne sont que des accessoires et, d'ailleurs, l'auteur dudit document les appelle "composants".

Or, de tels composants, ne sont généralement pas fabriqués par le constructeur du véhicule. Ainsi, il est relativement facile de s'en procurer sans avoir à justifier de son identité, ni de son titre de propriété. De plus, ils sont beaucoup plus facilement interchangeables qu'un élément structurel du véhicule et leur remplacement est beaucoup moins onéreux. Le vol du véhicule n'est donc pas découragé au maximum.

De plus, on remarquera qu'il serait délicat de faire fonctionner une unité de commande centrale dans l'ambiance parasitée d'un distributeur ou d'un démarreur. Il pourrait en résulter des erreurs de fonctionnement du système anti-vol conforme à l'invention.

Avantageusement, dans le système anti-vol selon l'invention, lesdits moyens codés se composent pour partie d'un circuit électronique alimenté par la batterie de bord du véhicule à travers le contact du circuit électrique de celui-ci et pour partie d'un composant porté par la clef de contact dudit véhicule, ledit composant étant indispensable audit circuit électronique pour former des moyens codés d'actionnement de ladite unité centrale.

De préférence, les unités de commande décentralisées sont incorporées auxdits organes et accessoires du véhicule et font partie intégrante du circuit électrique de ceux-ci.

Les liaisons entre l'unité de commande centrale et chacune desdites unités de commande centralisées et/ou entre ladite unité de commande centrale et lesdits moyens d'actionnement codés peuvent être filaires ou radioélectriques, suivant la nature des organes d'émission et de réception desdites unités de commande et desdits moyens d'actionnement codés. Il est toutefois avantageux que ces liaisons soient filaires et que ladite unité de commande centrale soit du type microprocesseur, alors que le circuit électronique des moyens d'actionnement codés et les unités de commande décentralisées constituent des périphériques dudit microprocesseur.

Dans ce dernier cas, le microprocesseur peut servir à d'autres fins que la protection contre le vol et notamment gêner, totalement ou partiellement, la conduite du véhicule.

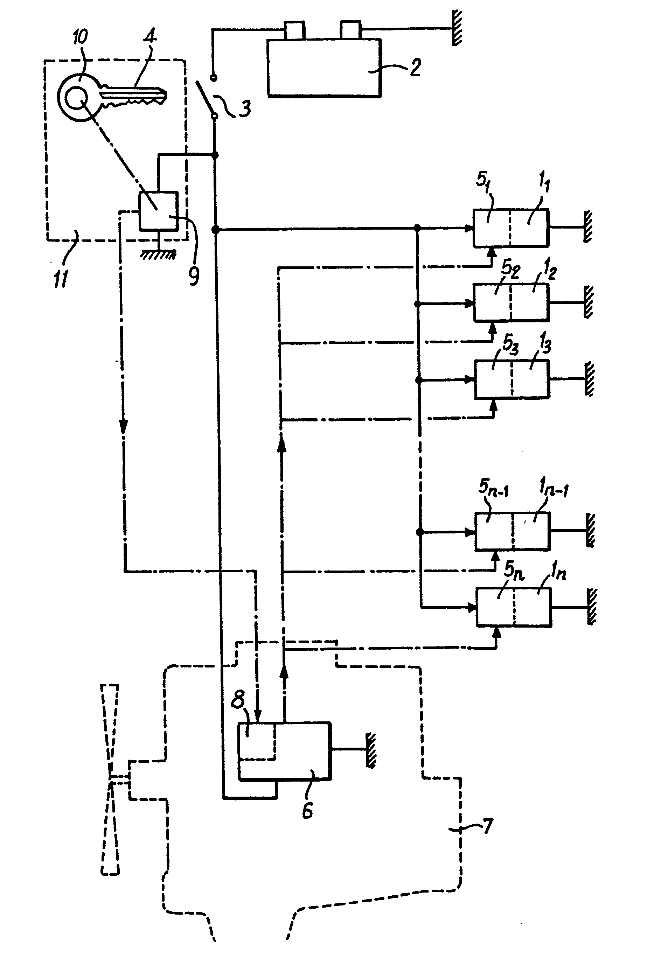

La figure unique du dessin annexé fera bien comprendre comment l'invention peut être réalisée.

Cette figure unique donne le schéma synoptique d'un exemple de réalisation du système anti-vol selon l'invention.

Sur cette figure, on peut voir une pluralité d'organes ou d'accessoires d'un véhicule automobile, tel que le système d'injection, le démarreur, etc ... portant les références $1_1$, $1_2$, $1_3$, ..., $1_{n-1}$, $1_n$.

Ces différents organes ou accessoires $1_1$ à $1_n$

sont alimentés en électricité à partir de la batterie de bord 2, à travers le contact 3, susceptible d'être fermé par le clef de contact 4.

A chacun desdits organes ou accessoires $1_1$ à $1_n$ est associée et/ou incorporée une unité de commande décentralisée correspondante $5_1$ à $5_n$, maîtresse du fonctionnement de l'organe ou de l'accessoire associé.

Chaque unité de commande décentralisée $5_1$ à $5_n$ est en liaison avec une unité de commande centrale 6, par exemple un microprocesseur. L'unité de commande centrale 6 est incorporée de façon pratiquement inaccessible, à un élément structurel 7 de l'automobile, par exemple le bloc du moteur ou la boîte de vitesse. L'unité de commande centrale 6 comporte un récepteur 8 de signal codé.

Par ailleurs, en aval du contact 3 par rapport à la batterie 2, le système comporte un circuit électronique 9, qui, avec un élément électronique 10 (par exemple un quartz piézo-électrique) porté par la clef 4, forme un émetteur 11.

Ainsi, lorsque la clef de contact 4 est retirée de sa serrure, le contact 3 est ouvert et le système selon l'invention est à l'arrêt.

En revanche, si l'on enforce la clef de contact 4 dans sa serrure et que l'on déverrouille celle-ci (et donc de façon usuelle la colonne de direction), on ferme le contact 3 et l'émetteur 11, formé de l'association du circuit 9 et du composant 10, émet un signal codé, dont la caractéristique ou code, peut avantageusement être donné au moins en partie par le composant 9.

Ce signal codé atteint le récepteur 8, qui, sensible au code, débloque l'unité centrale 6. Celle-ci transmet alors des ordres de commande aux différentes unités $5_1$ à $5_n$ qui débloquent les organes ou accessoires $1_1$ à $1_n$ correspondant.

On voit ainsi que pour éviter l'action d'inhibition de l'unité centrale 6 sur les organes ou accessoires $1_1$ à $1_n$, il est absolument indispensable de remplacer chacun de ceux-ci par un autre ne comportant pas d'unité de commande $5_1$ à $5_n$ associée.

En effet, si l'on tente de court-circuiter le contact 3 en l'absence de la clef 4, le système reste bloqué, puisque l'émetteur 11 n'est pas formé et ne peut actionner l'unité centrale 6 à travers le récepteur 8. De plus, il devient particulièrement long et fastidieux de tenter de court-circuiter les différentes unités $5_1$ à $5_n$, incorporées aux organes et accessoires $1_1$ à $1_n$, puisqu'il est alors nécessaire de modifier (ce qui est très difficile et même impossible) le circuit interne de ceux-ci.

Ainsi, les transformations à effectuer sur un véhicule volé, afin de pouvoir le réutiliser, sont tellement importantes et coûteuses, que le vol est découragé.

## Revendications

1. Système anti-vol pour véhicule automobile, notamment de luxe, du type comprenant une unité de commande centrale (6) contrôlant le fonctionnement d'une pluralité d'organes ou accessoires ($1_1$ à $1_n$) du véhicule et actionnée par des moyens codés (11) au moins en partie à la disposition du propriétaire de celui-ci, ledit système comportant une pluralité d'unités de commande décentralisées ($5_1$ à $5_n$), chacune associée à un desdits organes ou accessoires ($1_1$ à $1_n$) et ladite unité de commande centrale (6) commandant chacune desdits unités de commande décentralisées ($5_1$ à $5_n$), caractérisé en ce que ladite unité de commande centrale (6) est incorporée de façon inaccessible sans détérioration à un élément structurel (7) dudit véhicule, tel que le bloc moteur, la boîte de vitesses ou le châssis du véhicule.

2. Système anti-vol selon la revendication 1, caractérisé en ce que lesdits moyens codés (11) se composent pour partie d'un circuit électronique (9) alimenté par la batterie de bord (2) du véhicule à travers le contact (3) du circuit électrique de celui-ci et pour partie d'un composant (10) porté par la clef de contact (4) dudit véhicule, ledit composant (10) étant indispensable au circuit électronique (9) pour former les moyens codés d'actionnement de ladite unité centrale (6).

3. Système selon l'une quelconque des revendications 1 ou 2, caractérisé en ce que les unités de commande décentralisées ($5_1$ à $5_n$) sont incorporées auxdits organes ou accessoires ($1_1$ à $1_n$) et font partie intégrante du circuit électronique de ceux-ci.

## Patentansprüche

1. Diebstahlsicherungssystem für Kraftfahrzeuge, insbesondere in Luxusausführung, mit einer zentralen Steuereinheit (6), durch die der Betrieb mehrerer Organe oder Zubehörteile ($1_1$ bis $1_n$) des Fahrzeugs überprüft wird und die durch codierte Mittel (11) betätigt wird, über die der Fahrzeugseigentümer zumindest zum Teil verfügt, wobei das System mehrere dezentralisierte Steuereinheiten ($5_1$ bis $5_n$) aufweist, von denen jede einem der Organe oder einem der Zubehörteile ($1_1$ bis $1_n$) zugeordnet ist, und die zentrale Steuereinheit (6) jede der dezentralisierten Steuereinheiten ($5_1$ bis $5_n$) steuert, dadurch gekennzeichnet, daß die zentrale Steuereinheit (6) unzugänglich ohne Schädigung oder Verschlechterung eingearbeitet ist in ein wichtiges Bauteil (7) wie den Motorgetriebeblock, den Getriebekasten oder das Fahrzeugchassis.

2. Diebstahlsicherungssystem nach Anspruch 1, dadurch gekennzeichnet, daß die codierten Mittel (11) zum Teil aus einem elektronischen Schaltkreis (9), der von der Bordbatterie (2) des Fahrzeugs über den Kontakt (3) seines Stromkreis gespeist wird, und zum Teil aus einer Komponente (10) besteht, die durch den Zündschlüssel (4) des Fahrzeugs übertragen wird und zur Bildung der codierten Mittel zum Betätigen der zentralen Einheit (6) für den elektronischen Schaltkreis (9) unerläßlich ist.

3. Diebstahlsicherungssystem nach einem der Ansprüche 1 oder 2, dadurch gekennzeichnet, daß

die dezentralisierten Steuereinheiten ($5_1$ bis $5_n$) in die Organe oder Zubehörteile ($1_1$ bis $1_n$) eingearbeitet und mit deren elektronischen Schaltkreis ganzheitlich eingegliedert sind.

## Claims

1. Anti-theft system for automobile vehicle, particularly a luxury automobile, of the type comprising a central control unit (6) controlling the operation of a plurality of members or accessories ($1_1$ to $1_n$) of the vehicle and actuated by coded means (11) at least partly at the vehicle owner's disposal, said system comprising a plurality of decentralized control units ($5_1$ to $5_n$), each associated with one of said members or accessories ($1_1$ to $1_n$) and said central control unit (6) controlling each of said decentralized control units ($5_1$ to $5_n$), characterized in that said central control unit (6) is incorporated so as to be inaccessible without damage in a structural element (7) of said vehicle, such as the engine block, the gear-box or the chassis of the vehicle.

2. Anti-theft system according to claim 1, characterized in that said coded means (11) are composed partly of an electronic circuit (9) supplied by the battery (2) of the vehicle through the contact (3) of the electrical circuit thereof and partly of a component (10) borne by the switch key (4) of said vehicle, said component (10) being indispensable for the electronic circuit (9) to form the coded means for actuating said central unit (6).

3. System according to any one of claims 1 or 2, characterized in that the decentralized control units ($5_1$ to $5_n$) are incorporated in said members or accessories ($1_1$ to $1_n$) and form an integral part of the electronic circuit thereof.